# EUROPEAN PATENT SPECIFICATION

(11) **EP 2 242 350 B1**
(45) Date of publication and mention of the grant of the patent: **04.09.2013**
(21) Application number: 09710823.7
(22) Date of filing: 13.02.2009
(51) Int. Cl.: A01B 23/02, A01B 63/26, A01C 5/06, A01B 49/06

(54) **AGRICULTURAL MACHINE WITH A DOUBLE-TINE**
LANDWIRTSCHAFTSMASCHINE MIT DOPPELZINKEN
MACHINE AGRICOLE AVEC UNE DOUBLE DENT

(30) Priority: 15.02.2008 SE 0800358
(43) Date of publication of application: 27.10.2010
(73) Proprietor: Väderstad-Verken Aktiebolag, 590 21Väderstad (SE)
(72) Inventor: HOLGERSSON, Per-Arne, S-599 91 Ödeshög (SE); SANDBERG, Bengt, S-595 32 Mjölby (SE)
(74) Representative: Lettström, Richard Wilhelm
(86) International application number: PCT/SE2009/050154
(87) International publication number: WO 2009/102277

(56) References cited:
- WO-A1-2006/110103
- US-A- 1 950 834
- US-A- 2 805 613
- US-A- 4 423 787

## Description

The invention refers to a following harrow for agricultural implements according to the pre-characterising portion of Claim 1.

### BACKGROUND

Following harrows for seed drills have existed in various forms for a long time. The job of the following harrow is often to contribute to the best possible germination conditions for the seed and to break the capillary ability of the soil. Through this water is saved that would otherwise have evaporated and also heat, which promotes rapid germination of the seed.

The germination environment is improved since the tines of the following harrow help finer soil particles to be sorted deeper in the soil layer and coarser particles to be sorted up to the surface, while at the same time smoothing out the soil surface. By smoothing out the soil surface the sowing depth can be made more uniform.

The following harrow is often orientated behind sowing entities comprising seed coulters with following support wheels. The support wheel compresses the soil over the seed row while at the same time the wheel controls the sowing depth of the seed coulter. A seed drill usually comprises numerous such sowing entities each followed by its own following harrow device comprising two soil-cultivating tines. Due to varying soil conditions and wear, it is desirable that these can be adjusted in angle and possibly also in approach to the soil. Several manufacturers have solved this through the following harrow tines or their supports being displaceable in grooves or oblong holes and held fast by at least one screw.

Each following harrow device by the seed coulters must therefore be adjusted individually. In addition, they work in a harsh environment and are subjected to wear, which further complicates the adjustment work. US 1,950,834 discloses a harrow tooth according to the pre-characterising portion of claim 1. This harrow tooth is difficult to replace and can be rotated out of position when it in motion is exerted by a pressure from the ground.

### AIM OF THE INVENTION

The aim of the invention is to provide a device at agricultural machines, which device enables fast and simple setting and adjustment of the work position of a following harrow.

### SUMMARY OF THE INVENTION

The aim of the invention is solved through a device according to claim 1.

A following harrow entity comprises two soil-cultivating tines connected with each other via a cross-part that extends essentially across the driving direction of the agricultural implement rotatably journalled in bearings at an intermediate part that in its turn is rotatably journalled in bearings at a carrying arm where the intermediate part comprises movement-restricting members that limit the backward rotational movement of the following harrow entity in the driving direction of the agricultural implement. The rotational movement between the carrying arm and the intermediate part is achieved with the help of an adjustment apparatus.

Through this the rotational position of the intermediate part relative to the carrying arm can easily be adjusted. Through this the position of the movement-restricting member relative to the carrying arm is also altered and thereby also the rear end position of the following harrow entity. This end position also constitutes the work position of the following harrow entity since the force from the soil during cultivation influences the tines towards this end position.

Claim 2 describes where the carrying arm comprises a movement-restricting member that limits the forward rotational movement of the following harrow entity in the driving direction of the agricultural implement. Through this the tines can be prevented from being lifted out of the soil during reversing of the agricultural implement. Through the tines remaining in the soil this ensures that they return to their rear end position when forward movement resumes.

Claim 3 describes an advantageous embodiment where the adjustment apparatus comprises a screw which at one end is screwed fast to the carrying arm and the other end of which runs through a hole in the intermediate part. A threaded adjustment member influences the position of the intermediate part relative to the carrying arm. One can thus easily adjust the device through turning a nut with the help of a spanner or turning a wing nut or the like by hand.

Other characteristics and advantages are given in the description of an embodiment below with reference to the attached drawings.

### DRAWING SUMMARY

Figure 1 shows a sowing entity with a device according to the invention.
Figure 2 shows a part of a carrying arm with a following harrow entity.
Figure 3 shows a side view of the carrying arm and the following harrow entity with an intermediate part in its one end position.
Figure 4 shows a side view of the carrying arm and the following harrow entity with the intermediate part in its other end position.

### DETAILED DESCRIPTION

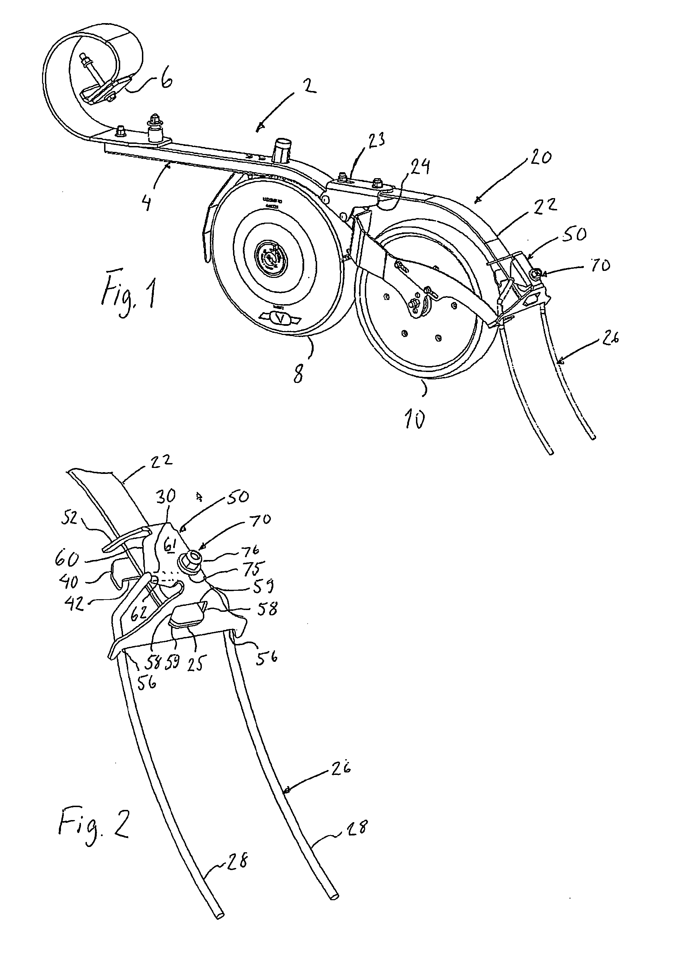

Figure 1 shows a sowing entity 2 for an agricultural implement in the form of a seed drill. The work direction of the seed drill is to the left in the drawing. The sowing entity 2 is fastened at the seed drill via a resiliently suspended connection arm 4 at one end 6 of the arm 4. At its other end a so called V-disc 8 is arranged for creating a seed furrow. After the V-disc 8 a support wheel 10 is arranged. The seed drill is provided with a plurality of such sowing entities arranged beside each other in the lateral direction. This principle arrangement is in itself known.

Behind the sowing entity 2 a following harrow device 20 according to the invention is provided.

The following harrow device 20 comprises a carrying arm 22 which at its fore end 23 is fastened at the sowing entity 2 with a fastening 24. This fastening can if so desired be adjustable to enable adjustment of the following harrow in the longitudinal direction. This is achieved here through a displaceable screw connection. The carrying arm 22 is suitably designed as slightly curved flat spring steel.

At the rear end 25 of the carrying arm 22 a following harrow entity 26 and an intermediate part 50 are arranged as is now described more closely with reference to Figures 2 - 4.

The following harrow entity 26 comprises two following harrow tines 28 adapted to cultivate the soil on each side of the support wheel 10. The following harrow tines 28 are at their upper ends connected with each other through a cross-part 30 orientated essentially across the working direction of the seed drill. The following harrow entity 26 is suitably designed in one piece through a bowed cold-drawn spring wire.

The cross-part 30 is rotatably arranged at an intermediate part 50 designed in one piece, preferably a bowed piece of metal, alternatively of a durable plastic material. The intermediate part 50 comprises an upper portion 61 at which it is connected with the carrying arm by an adjustment apparatus 70. On each side of the upper portion 61 a flange 60 is bowed down towards the carrying arm 22. The flanges 60 are provided with recesses 62 against which the cross-part 30 abuts, where the flanges 60 are adapted to press the cross-part 30 against the carrying arm 22. At the rear end of the upper portion 61 a flange 54 is bowed downwards. The flange 54 comprises movement-limiting members 56 in the form of stop areas that limit the backward rotational movement of the following harrow entity 26 in the driving direction of the agricultural implement.

The adjustment apparatus 70 comprises a screw 72 that is screwed fast at the carrying arm 22, suitably in the form of a carriage bolt with its head 90 at the underside of the carrying arm 22. The screw 72 runs at its other end through a hole 75 in the upper portion 61 and is secured therein with the help of an adjustment member 76 in the form of a nut 76. At the area around the screw 72 the carrying arm 22 and the intermediate part 50 are influenced away from each other with the help of a spring member 78 clamped between the upper surface 80 of the carrying arm and the under surface 82 of the upper portion 61. The spring member 78 is suitably composed of a resilient rubber sleeve, helical screw or similar that encloses the screw 72.

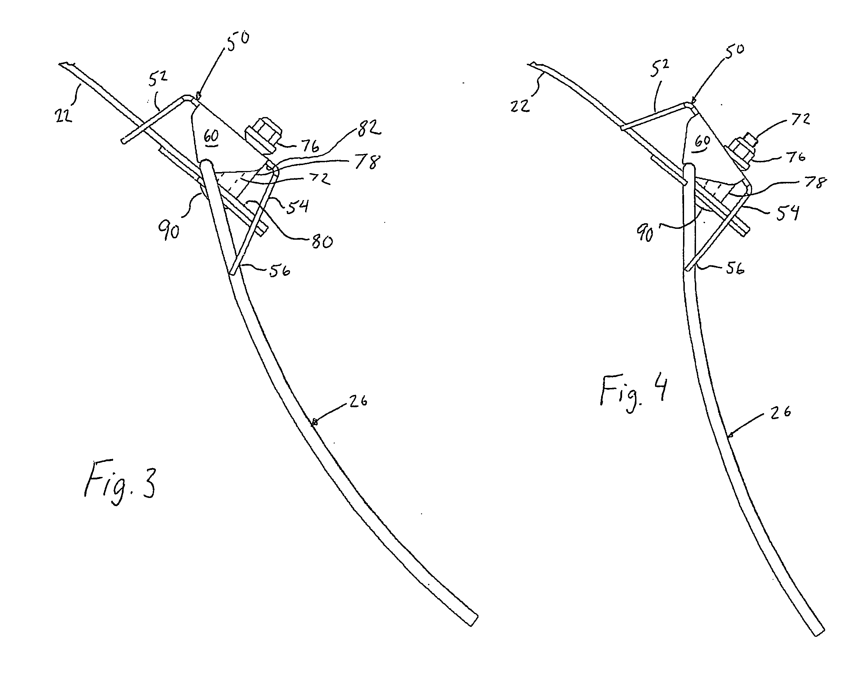

Figure 3 shows the device with the intermediate part 50 in its one end position. Through turning the nut 76 with a suitable spanner this area of the intermediate part 50 is pressed down towards the carrying arm 22 whereupon the spring member 78 is also compressed. This causes the intermediate part 50 to be rotated relative to the carrying arm around an axis through the cross-part 30, which in its turn causes the movement-limiting members 56 to be displaced relative to the carrying arm whereby the work position of the following harrow entity 26 is also altered.

In Figure 4 the device is shown with the intermediate part 50 in its other end position where the angle of the following harrow entity 26 relative to the carrying arm 22 is changed relative to the position in Figure 3. It should be pointed out here that the geometric conditions mean that the cross-part 30 also slides somewhat along the carrying arm. The axis around which the intermediate part 50 is allowed a rotational movement relative to the carrying arm 22 is thereby displaced somewhat during the rotation.

Through the intermediate part 50 pressing the cross-part 30 against the carrying arm 22 a certain friction is created which prevents the following harrow entity 26 moving during transport when the entire sowing entity 2 with the following harrow device 20 is lifted out of the soil. This reduces the risk of damage to the component parts.

According to an alternative embodiment the cross-part 30 runs through holes in the flanges 60 which in turn press against the carrying arm 22. Such an embodiment requires additional movement-limiting members if one wishes to prevent free swing of the following harrow entity 26 during transport.

As is shown in Figure 2, the rear end 25 of the carrying arm 22 runs through a hole in the rear flange 54 of the intermediate part 50. The upper and lower edges 59 of the hole define the end positions for rotation of the intermediate part 50 shown in Figures 3 and 4. The side edges 58 of the hole prevent the intermediate part 30 being rotated relative to the carrying arm 22 around the longitudinal axis of the screw 72. To this aim a rear flange 52 is arranged bowed downwards from the upper portion 61.

At the carrying arm 22 is arranged a protruding portion 40 at which a movement-limiting member 42 limits the forward rotational movement of the following harrow entity 26 in the driving direction of the agricultural implement.

The invention can be varied within the framework of the patent claims. The adjustment apparatus can for example consist of a wing nut which completely eliminates the need for tools for setting and adjusting. The extent to which the following harrow tines and/or the carrying arm should be resilient can be varied depending on preference. In addition the sowing entity shown can be replaced by another type.

## Claims

1. Following harrow for agricultural implements, comprising a carrying arm (22) and a following harrow entity (26) comprising two soil-cultivating tines (28) connected with each other via a cross-part (30) that extends essentially across the driving direction of the agricultural implement, said cross-part (30) being moveably arranged by means of an adjustment apparatus (70) so that it is enabled a rotational movement relative to the carrying arm (22) around an axis extending essentially across the driving direction of the agricultural implement, **characterised in that** said adjustment apparatus (70) comprises a screw (72) which at its one end is screwed fast to the carrying arm (22) and the other end of which runs through a hole (75) in an intermediate part (50), and that a threaded adjustment member (76) interacting with the screw (72) influences the position of the intermediate part (50) relative to the carrying arm (22), thereby connecting the intermediate part (50) with the carrying arm (22), that at the area around the screw (72) the carrying arm (22) and the intermediate part (50) are influenced away from each other with help of a spring member (78), whereby the intermediate part is arranged to press the cross-part (30) against the carrying arm, and that the intermediate part (50) comprises movement-limiting members (56) that limit the backward rotational movement of the following harrow entity (26) in the driving direction of the agricultural implement.

2. Device according to Claim 1, **characterised in that** the carrying arm (22) comprises movement-limiting members (42) that limit the forward rotational movement of the following harrow entity (26) in the driving direction of the agricultural implement.

## Patentansprüche

1. Nachlauf-Egge für landwirtschaftliche Gerätschaften, umfassend einen Tragarm (22) und eine Nachlauf-Eggeneinheit (26), umfassend zwei Bodenbearbeitungszinken (28), die miteinander mittels eines Querteils (30) verbunden sind, welches sich im Wesentlichen quer zur Fahrtrichtung der landwirtschaftlichen Gerätschaft erstreckt, wobei das Querteil (30) mittels einer Einstellungsvorrichtung (70) beweglich angeordnet ist, so dass es eine Drehbewegung bezüglich des Tragarms (22) um eine Achse ausführen kann, die sich im Wesentlichen quer zur Fahrtrichtung der landwirtschaftlichen Gerätschaft erstreckt, **dadurch gekennzeichnet, dass** die Einstellvorrichtung (70) eine Schraube (72) umfasst, die an ihrem einen Ende an dem Tragarm (22) festgeschraubt ist und deren anderes Ende durch ein Loch (75) in einem Zwischenteil (50) verläuft, und dadurch dass ein mit der Schraube (72) zusammenwirkendes Gewindeeinstellungselement (76) die Stellung des Zwischenteils (50) zu dem Tragarm (22) beeinflusst und dadurch das Zwischenteil (50) mit dem Tragarm (22) verbindet, dadurch dass in dem Bereich um die Schraube (72) der Tragarm (22) und das Zwischenteil (50) mittels eines Federelements (78) voneinander weg beaufschlagt sind, wodurch das Zwischenteil dazu angeordnet ist, das Querteil (30) gegen den Tragarm zu drücken, und dadurch dass das Zwischenteil (50) bewegungsbegrenzende Elemente (56) umfasst, die die Rückwärtsdrehbewegung der Nachlauf-Eggeneinheit (26) in der Fahrtrichtung der landwirtschaftlichen Gerätschaft begrenzen.

2. Vorrichtung nach Anspruch 1, **dadurch gekennzeichnet, dass** der Tragarm (22) bewegungsbegrenzende Elemente (42) umfasst, die die Vorwärtsdrehbewegung der Nachlauf-Eggeneinheit (26) in der Fahrtrichtung der landwirtschaftlichen Gerätschaft begrenzen.

## Revendications

1. Herse suiveuse pour des outils agricoles, comprenant un bras porteur (22) et une entité de herse suiveuse (26) comprenant deux dents de labourage (28) reliées l'une l'autre par une pièce transversale (30) qui s'étend essentiellement en travers de la direction d'entraînement de l'outil agricole, ladite pièce transversale (30) étant agencée de manière mobile au moyen d'un dispositif de réglage (70) de sorte qu'il est permis un mouvement de rotation par rapport au bras porteur (22) autour d'un axe s'étendant sensiblement transversalement à la direction d'entraînement de l'outil agricole, **caractérisée en ce que** ledit dispositif de réglage (70) comprend une vis (72) qui, à une de ses extrémités, est vissée rapidement au bras porteur (22) et dont l'autre extrémité s'étend à travers un trou (75) dans une pièce intermédiaire (50), et **en ce qu'**un élément de réglage fileté (76) coopérant avec la vis (72) influe sur la position de la pièce intermédiaire (50) par rapport au bras porteur (22), connectant de ce fait la pièce intermédiaire (50) au bras porteur (22), **en ce que**, dans la zone entourant la vis (72), le bras porteur (22) et la pièce intermédiaire (50) sont sollicitées en éloignement l'une de l'autre au moyen d'un élément à ressort (78), de sorte que la pièce intermédiaire est agencée pour appuyer sur la pièce transversale (30) contre le bras porteur, et **en ce que** la pièce intermédiaire (50) comprend des éléments de limitation de mouvement (56) qui limitent le mouvement de rotation arrière de l'entité de herse suiveuse (26) dans la direction d'entraînement de l'outil agricole.

2. Dispositif selon la revendication 1, **caractérisé en ce que** le bras porteur (22) comprend des éléments de limitation de mouvement (42) qui limitent le mouvement rotation vers l'avant de l'entité de herse suiveuse (26) dans la direction d'entraînement de l'outil agricole.
